# EUROPÄISCHE PATENTSCHRIFT

(11) **EP 1 423 296 B1**
(45) Veröffentlichungstag und Bekanntmachung des Hinweises auf die Patenterteilung: **19.04.2006**
(21) Anmeldenummer: 02769945.3
(22) Anmeldetag: 09.09.2002
(51) Int. Cl.: B60N 2/66

(54) **STÜTZELEMENT FÜR EINE POLSTERUNG EINES KRAFTFAHRZEUGSITZES**
SUPPORT ELEMENT FOR UPHOLSTERING ON A VEHICLE SEAT
ELEMENT DE SUPPORT POUR LE REMBOURRAGE D'UN SIEGE DE VEHICULE AUTOMOBILE

(30) Priorität: 07.09.2001 DE 10145206
(43) Veröffentlichungstag der Anmeldung: 02.06.2004
(73) Patentinhaber: Brose Fahrzeugteile GmbH & Co. KG, Coburg, 96450 Coburg (DE)
(72) Erfinder: FORKEL, Michael, 96450 Coburg (DE); BAUERSACHS, Andrea, 96237 Ebersdorf (DE); RAUSCH, Peter, 98489 Niederfüllbach (DE)
(74) Vertreter: Baumgärtel, Gunnar
(86) Internationale Anmeldenummer: PCT/DE2002/003411
(87) Internationale Veröffentlichungsnummer: WO 2003/022626

(56) Entgegenhaltungen:
- DE-C- 4 232 679
- DE-U- 20 121 283
- US-A- 5 299 851
- US-A- 5 518 294
- US-A- 5 641 205
- US-A- 5 868 466
- US-A- 5 954 399

## Beschreibung

Die Erfindung betrifft ein Stützelement für eine Polsterung eines Kraftfahrzeugsitzes, insbesondere für eine Lehnenpolsterung, nach dem Oberbegriff des Patentanspruchs 1.

Ein derartiges Stützelement umfasst einen großflächigen Basisbereich, der ausgebildet und vorgesehen ist zur Anordnung auf der Rückseite der Polsterung und der eingerichtet ist zur Aufnahme und Verteilung von Druckkräften, die bei einer Belastung der Vorderseite der Polsterung durch einen Fahrzeuginsassen auftreten. Ein solches Stützelement ist insbesondere vorgesehen zur Anordnung zwischen der Lehnenpolsterung eines Kraftfahrzeugsitzes und einem sich entlang der Rückseite der Lehnenpolsterung erstreckenden Wölbelement und dessen Lage und/oder Wölbung mittels einer Verstelleinrichtung einstellbar ist, um die Wölbung des Lehnenpolsters an die Bedürfnisse unterschiedlicher Fahrzeuginsassen anpassen zu können.

Aus der DE 36 19 188 C1 ist eine Rückenlehne für Kraftfahrzeugsitze bekannt, deren Polster mittels eines Wölbelementes in Form zweier Blattfedern einstellbar ist, wobei zwischen den Blattfedern und dem Polster eine Druckverteilerplatte angeordnet ist.

Durch die Anordnung eines Stützelementes, z. B. in Form einer Druckverteilerplatte, zwischen dem Wölbelement und der Polsterung der Rückenlehne wird erreicht, dass das Wölbelement auf die Polsterung nicht unmittelbar, sondern vielmehr über das Stützelement einwirkt, welches derart ausgestaltet ist, dass es - auch bei starker Wölbung des Wölbelementes - eine großflächige, ergonomische Abstützung des Rückenbereiches eines Fahrzeuginsassen gewährleistet. Insbesondere soll durch das flächige Stützelement erreicht werden, dass bei jeder Einstellung des Wölbelementes eine an die Kontur des jeweiligen Rückenbereiches angepasste Abstützung des Rückens des entsprechenden Fahrzeuginsassen erfolgt. D.h., die Wölbung eines hinreichend flexiblen (elastisch wölbbaren) Stützelementes wird nicht nur durch die Einstellung des Wölbelementes, sondern auch durch die Kontur der Rückenpartie des jeweiligen Fahrzeuginsassen mitbestimmt und ist dadurch ergonomisch optimal angepasst.

In der US-A- 5,518,294 und der US-A-5,868,466 werden Stützelemente für Lehnenpolsterungen für Rückenlehnen eines Kraftfahrzeugsitzes beschrieben, bei den von einer Stützplatte Stützbereiche abstehen, die jeweils nebeneinander aufgereiht sind. Zur Verbindung der Stützbereiche mit der Basisplatte des Stützelementes sind schmale Verbindungsstege vorgesehen, die Verbiridungsstege werden jedoch nicht genutzt, um die von der Basisplatte abstehenden Stützbereiche ineinander zu verschachteln.

Der Erfindung liegt das Problem zugrunde, ein Stützelement der eingangs genannten Art weiter zu verbessern, insbesondere hinsichtlich des Sitzkomforts für einen Fahrzeuginsassen.

Dieses Problem wird erfindungsgemäß durch die Schaffung eines Stützelementes mit den Merkmalen des Patentanspruchs 1 gelöst.

Danach steht von dem Rand des großflächigen Basisbereiches des Stützelementes eine Mehrzahl voneinander getrennter, entlang des Randes benachbarter Stützbereiche ab. Es hat sich gezeigt, dass durch die Anordnung derartiger zusätzlicher (vorzugsweise am Basisbereich angeformter) Stützbereiche (Stützkonturfinger) am Rand des großflächigen Basisbereiches des Stützelementes eine besonders gleichmäßige Unterstützung des Rückenbereiches eines Insassen und eine besonders gute Anpassung an dessen Rückenpartie, unabhängig von der jeweiligen Einstellung des Wölbelementes, erreicht werden kann.

Die Verbindung der Stützbereiche mit dem Basisbereich erfolgt über jeweils einen Verbindungsbereich, der sich von dem Stützbereich zu dem Basisbereich hin zumindest Abschnittsweise verjüngt, z. B. abschnittsweise als Steg ausgebildet ist. Bei einem Verbindungsbereich, der entlang einer ersten Richtung, z. B. im Wesentlichen senkrecht zum Rand des Basisbereiches von dem Basisbereich absteht, bedeutet dies, dass die Breite des Verbindungsbereiches, d. h., dessen Ausdehnung senkrecht zu der ersten Richtung kleiner ist als die- maximale Breite des Stützbereiches jenseits des Verbindungsbereiches. Hierdurch wird eine besondere Elastizität der Stützbereiche gewährleistet und somit eine besonders gute Anpassbarkeit an den jeweiligen Fahrzeuginsassen.

Erfindungsgernäß sind entlang des Randes des Basisbereiches abwechselnd Stützbereiche unterschiedlicher Größe, z. B. jeweils abwechselnd Stützbereiche einer ersten Größe und einer hiervon verschiedenen zweiten Größe (bezogen auf ihre Fläche in der Ebene des Stützelementes) angeordnet und dabei ineinander verschachtelt. Hierdurch soll, z.B. im Schulterblattbereich eines Fahrzeuginsassen, eine große Abstützfläche mit vorteilhaften elastischen Eigenschaften zur Verfügung gestellt werden. Dementsprechend ist eine derartige Anordnung vor allem im Bereich des oberen Randabschnittes eines Stützelementes für eine Rückeniehnenpoisterung vorzusehen.

Unter der benachbarten Anordnung mindestens zweier Stützbereiche entlang des Randes ist zu verstehen, dass die beiden Stützbereiche entlang einer Raumrichtung benachbart angeordnet sind, entlang der sich der Rand zwischen den beiden besagten Stützbereichen erstreckt. Die beiden Stützbereiche können insbesondere eines Randabschnittes benachbart angeordnet sein, der entlang der besagten Raumrichtung verläuft.

Besonders bevorzugt sind dabei mindestens drei Stützbereiche vorgesehen, die entlang eines Randabschnittes hintereinander und dabei jeweils paarweise nebeneinander angeordnet sind.

Die Stützbereiche können in einfacher Weise durch an den Rand des Basisbereiches einstückig angeformte Fortsätze gebildet werden. Durch die erfindungsgemäß vorgesehene Anordnung mehrerer Stützbereiche entlang des Randes des Basisbereiches, die jeweils von dem Basisbereich abstehen, weist das Stützelement im Bereich seines Randes eine besondere (gegenüber dem zentralen Basisbereich erhöhte) Elastizität auf, so dass die Möglichkeit der Anpassung des Stützelementes an die Rückenpartie eines jeweiligen Fahrzeuginsassen verbessert wird. Das Stützelement insgesamt ist vorzugsweise wölbbar ausgebildet.

Insbesondere sind die Stützbereiche entlang des Randes des Basisbereiches des Stützelementes derart von einander beabstandet, dass sie jeweils nur mit dem Basisbereich nicht aber zusätzlich untereinander verbunden sind.

Alternativ kann vorgesehen sein, dass einzelne, insbesondere benachbarte, Stützbereiche über (lose) Materialbereiche miteinander verbunden sind die die Beweglichkeit der einzelnen Stützbereiche zueinander nicht (wesentlich) einschränken, also die Elastizität der Stützbereiche nicht beeinträchtigen.

Ferner können benachbart angeordnete Stützbereiche einander überlappen. Die überlappenden Stützbereiche sind dann jedoch vorzugsweise jeweils über Verbindungsbereiche mit dem Basisbereich verbunden, die entlang des Randes des Basisbereiches voneinander beabstandet sind.

Die Stützbereiche können sich im Wesentlichen in derselben Ebene erstrecken, in der auch der zugehörige Randbereich des Basisbereiches des Stützelementes liegt oder besonders bevorzugt in einem stumpfen Winkel zu jener Ebene verlaufen, so dass zumindest ein Teil der Stützbereiche zu der Polsterung hin abgewinkelt ist. Hierdurch wird die Stützwirkung des .Stützelementes weiter verbessert, insbesondere im Hinblick auf eine gleichmäßige Aufnahme und Verteilung von Druckkräften.

Bei einem im Wesentlichen rechteckig ausgebildeten großflächigen Basisbereich des Stützelementes weist der Basisbereich vier Randabschnitte auf, die einander jeweils paarweise gegenüberliegen, wobei an mindestens einem der Randabschnitte eine Mehrzahl von einander beabstandeter Stützbereiche vorgesehen ist. Bezogen auf die Einbaulage des Stützelementes in einen Kraftfahrzeugsitz mit senkrecht aufgestellter Rückenlehne können die Stützbereiche beispielsweise am oberen und/oder unteren Randabschnitt sowie an einem oder vorzugsweise beiden seitlichen Randabschnitten vorgesehen sein.

Gemäß einer Weiterbildung der Erfindung weist das Stützelement Versteifungsbereiche, insbesondere in Form von Sicken oder Rippen, sowie gegebenenfalls Schwächungsbereiche, insbesondere in Form von Öffnungen oder Schlitzen, auf, um einen definierten, über die gesamte Fläche des Stützelementes vergleichmäßigten Druckverlauf zu erreichen. Die Versteifungsbereiche können sich dabei auch in die am Rand des Stützelementes vorgesehenen Basisbereiche hineinerstrecken, und zwar vorzugsweise derart, dass die Steifigkeit des entsprechenden Stützbereiches zu seinem (von dem Rand des Basisbereiches entfernten) freien Ende hin abnimmt.

Bei Stützbereichen, die vom unteren Randabschnitt des Basisbereiches eines Stützelementes für eine Lehnenpolsterung abstehen, kann ein Verzicht auf Versteifungsbereiche vorteilhaft sein, wenn dort eine besonders nachgiebige Ausbildung des Stützelementes einen zu starken Druck auf die Wirbelsäule eines Fahrzeuginsassen verhindern soll.

Weiterhin sind die Stützbereiche in einer bevorzugten Ausführungsform um eine Achse federelastisch ausgebildet, die durch einen längserstreckten Versteifungsbereich, z. B. in Form einer Rippe, definiert wird.

Die äußere Kontur, d. h. der Rand, der am Basisbereich angeordneten und dort z.B. einstückig angeformten Stützbereiche ist vorzugsweise gekrümmt ausgeführt, d. h. frei von scharfen Ecken, wodurch besonders vorteilhafte Abstützeigerischaften erreicht werden.

Gemäß einer Weiterbildung der Erfindung sind in den Eckabschnitten des Basisbereiches des Stützelementes Stützbereiche vorgesehen, die bezüglich einer Verdrehachse, die beispielsweise durch einen Versteifungsbereich gebildet werden kann, eine asymmetrische Flächenaufteilung aufweisen, wobei die kleinere Fläche nach außen, d. h. weg von dem Stützelement weist und die größere Fläche hin zu weiteren Stützbereichen des Stützelementes weist. Hierdurch wird der entsprechende Stützbereich bei einer Belastung derart verdreht, dass sich der nach außen weisende äußere Flächenbereich nach vorne verlagert und hierdurch der Seitenhalt eines Fahrzeuginsassen verbessert wird. Die hierfür erforderliche asymmetrische Flächenaufteilung kann beispielsweise dadurch erreicht werden, dass an dem entsprechenden Stützbereich ein zusätzlicher, nach innen gerichteter Stützfinger vorgesehen ist oder dass der nach innen gerichtete Flächenabschnitt in sonstiger Weise gegenüber dem nach außen gerichteten Flächenabschnitt vergrößert ist, so dass der nach innen gerichtete Hebelarm der Stützfläche größer als der nach außen gerichtete Hebelarm ist.

Für eine weitere Vergleichmäßigung von Druckkräften kann das Stützelement Druckverteilungsbereiche, insbesondere in Form von Durchgangsöffnungen aufweisen.

Eine Rückenlehne für einen Kraftfahrzeugsitz mit einem erfindungsgemäßen Stützelement ist durch die Merkmale des Patentanspruchs 23 charakterisiert.

In einer bevorzugten Ausführungsform weist diese Rückenlehne ein Wölbelement auf, das sich entlang der Rückseite der Lehnenpolsterung erstreckt, sowie eine Verstelleinrichtung, mit der die Lage und/oder die Krümmung des Wölbelementes verstellbar ist, um die Wölbung der Lehnenpolsterung einzustellen. Hierbei erstreckt sich das Stützelement zwischen dem Wölbelement und dem Lehnenpolster, so dass es einerseits mit dem Wölbetement in Wirkverbindung steht und andererseits zumindest abschnittsweise an dem Lehnenpolster anliegt.

Zur Einstellung der Wölbung des Lehnenpolsters weist die dem Wölbelement zugeordnete Verstelleinrichtung mindestens ein Verstellelement auf, z. B. in Form eines Exzenters, das mit dem Wölbelement in Wirkverbindung bringbar ist und hierdurch über das Wölbelement auf das Stützelement der Lehnenpolsterung einwirkt.

Sowohl das Wölbelement als auch das Stützelement können jeweils an ausgewählten Punkten, insbesondere im Bereich ihrer oberen und unteren Ränder am Lehnengestell fixiert sein. Die zugeordnete Verstelleinrichtung bewirkt dann je nach Einstellung eine definierte Wölbung des Wölbelementes bzw. des Stützelementes zwischen den Befestigungspunkten. Von Bedeutung für eine ergonomische Abstützung des Rückenbereiches eines Fahrzeuginsassen ist dabei vor allem die Wölbbarkeit des Stützelementes. Das Wölbelement dient demgegenüber dazu, das Stützelement mit der zugeordneten Verstelleinrichtung zu koppeln. Dies kann sowohl durch eine Wölbung als auch durch eine Verschiebung des Wölbelementes bei Betätigung der Verstelleinrichtung geschehen, wobei die Verschiebung quer zur Ebene des Lehnengestells erfolgt.

Die Wölbung des Stützelementes wird dabei jedoch nicht nur durch die Einstellung der Verstelleinrichtung, sondern insbesondere auch durch die Kontur des Rückenbereichs und durch das Gewicht des auf dem Sitz befindlichen Fahrzeuginsassen bestimmt.

Das Wölbelement weist in den Bereichen, in denen es mit einem Verstellelement der Verstelleinrichtung in Kontakt bringbar ist, eine größere Steifigkeit auf als in dem Bereich, der an der Rückenlehne anliegt. Hierdurch ist einerseits gewährleistet, dass das Wölbelement die Verstellkräfte der zugeordneten Verstelleinrichtung aufnehmen und zu dem Stützelement weiterleiten kann und andererseits wird eine hinreichend flexible Anlage des Wölbelementes an dem Stützelement erreicht.

Gemäß einer Ausführungsform weist das Wölbelement zwei längserstreckte seitliche Bereiche erhöhter Steifigkeit auf, die durch einen zentralen Bereich des Wölbelementes miteinander verbunden sind. Der zentrale Bereich kann beispielsweise als Quertraverse bzw. Querstrebe ausgebildet sein und ist mit dem Stützelement verbunden. Zur Trennung der Bereiche erhöhter Steifigkeit von dem mindestens einen Bereich geringerer Steifigkeit können Schwächungsbereiche in Form von Schlitzen vorgesehen sein. Zur Schaffung von Bereichen erhöhter Steifigkeit des Wölbelementes eignen sich beispielsweise Versteifungsrippen bzw. Versteifungssicken.

Das Stützelement ist in seiner Erstreckungsebene vorzugsweise großflächiger ausgebildet als das Wölbelement.

Als Verstellelemente, die auf das Wölbelement einwirken, können beliebige Elemente dienen, die die gewünschte Verstellung des Wölbelementes ermöglichen, wie z. B. Exzenterscheiben oder Zugmittel in Form von Seilen oder Drähten.

Weitere Merkmale und Vorteile der Erfindung werden bei der nachfolgenden Beschreibung eines Ausführungsbeispiels anhand der Figuren deutlich werden.

Es zeigen:
- Figuren 1a bis 1d: vier verschiedene Ansichten eines Lehnengestells mit einem daran befestigten, mittels eines Antriebs verstellbaren Wölbelement und einem vor dem Wölbelement angeordneten großflächigen Stützelement;
- Figuren 2a bis 2d: vier verschiedene Ansichten des Stützelementes aus den Figuren 1a bis 1d;
- Figuren 3a bis 3d: vier verschiedene Ansichten des Wölbelementes aus den Figuren 1a bis 1d;
- Figuren 4a bis 4c: drei unterschiedliche Ansichten des Wölbelementes und des Stützelementes aus den Figuren 1a bis 1d, wobei diese miteinander verbunden sind;
- Figuren 5a bis 5c: eine schematische Darstellung der Anordnung aus den Figuren 1a bis 1d in drei verschiedenen Einstellungen der Verstelleinrichtung für das Wölbelement;
- Figur 6: eine Abwandlung des Ausführungsbeispiels aus den Figuren 1a bis 1d hinsichtlich der Verstelleinrichtung.

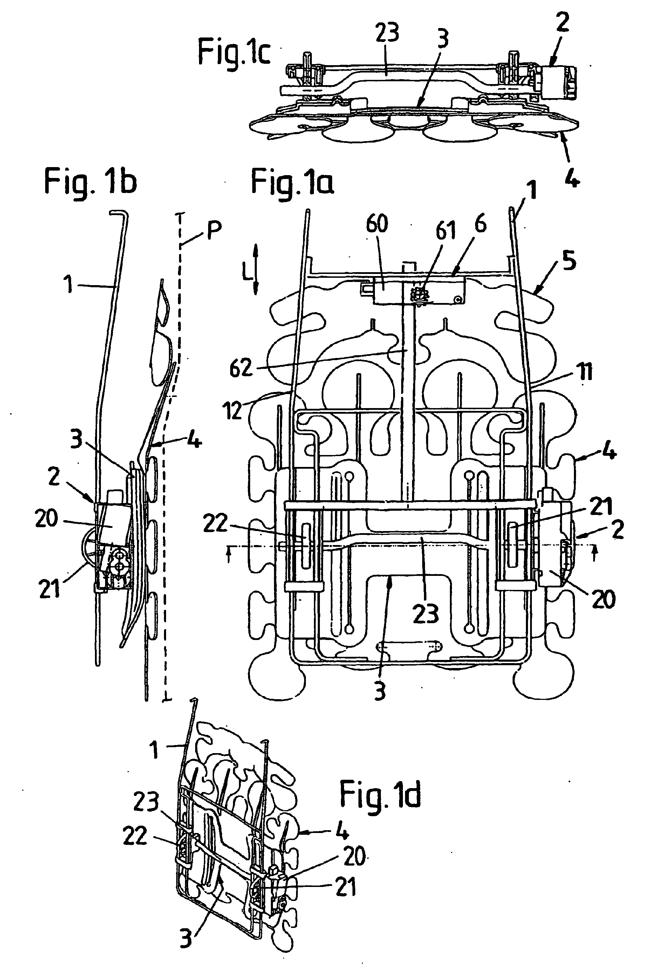

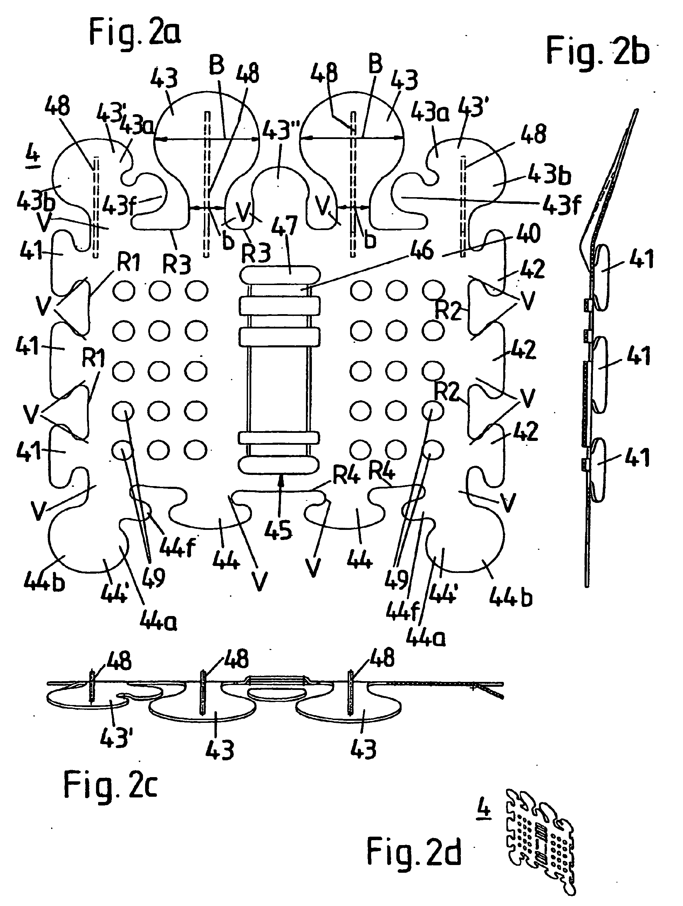

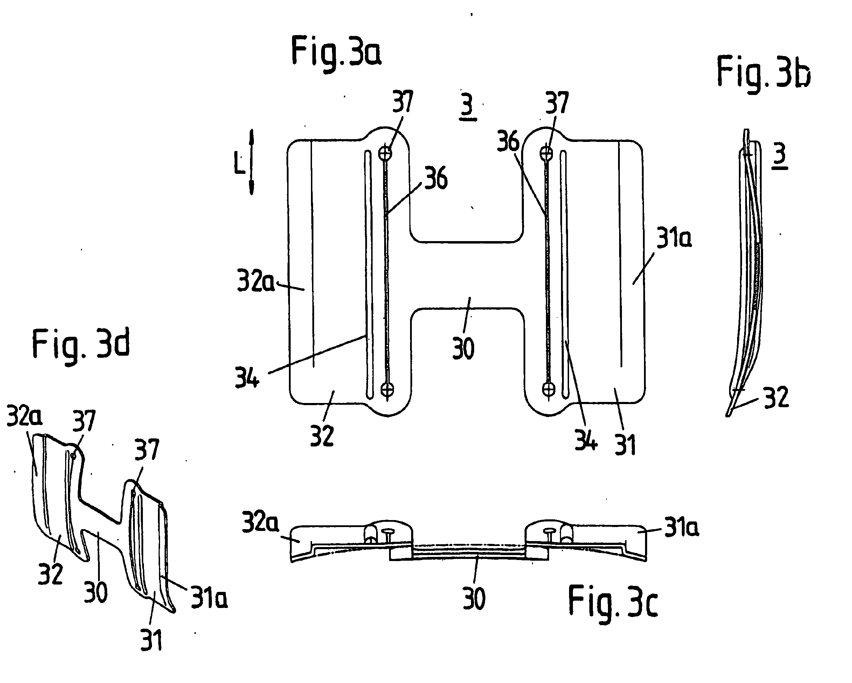

In der Gesamtdarstellung gemäß den Figuren 1a bis 1d und den Einzeldarstellungen gemäß den Figuren 2a bis 2d, 3a bis 3d sowie 4a bis 4c ist eine Rückenlehne für einen Kraftfahrzeugsitz gezeigt, mit einem Lehnengestell 1, an dem zur Schaffung einer einstellbaren Lordosenstütze ein Wölbelement 3 angeordnet ist, dessen Wölbung mittels einer Verstelleinrichtung 2 einstellbar ist. Von dem Lehnengestell ist dabei lediglich ein am Lehnenrahmen eingehängtes Drahtgitter dargestellt an dem die Verstelleinrichtung 2 befestigt ist.

Das Wölbelement 3 besteht aus zwei in Lehnenlängsrichtung L erstreckten seitlichen Abschnitten 31, 32 und einer diese Abschnitte 31, 32 verbindenden, sich quer zur Lehnenlängsrichtung L erstreckenden Quertraverse 30. Die beiden seitlichen Abschnitte 31, 32 des Wölbelementes 3 weisen jeweils Versteifungssicken 34 auf und sind dadurch steifer ausgebildet als die biegsame Quertraverse 30.

Zur Entkopplung der beiden seitlichen Abschnitte 31, 32 des Wölbetementes 3 von der zentralen Quertraverse 30 sind zwei Längsschlitze 36 vorgesehen, die sich an der der Quertraverse 30 zugewandten Seite des jeweiligen seitlichen Abschnittes 31 bzw. 32 des Wölbelementes 3 erstrecken. Diese Schlitze 36 sind an ihren Enden 37 jeweils kreisfönnig ausgebildet.

Eine zusätzliche Versteifung der seitlichen Abschnitte 31, 32 des Wölbelementes 3 wird dadurch erreicht, dass die seitlichen Abschnitte 31, 32 an ihren äußeren Rändern 31a, 32a jeweils im wesentlichen L-förmig abgewinkelt sind. Diese Verformung der Randbereiche 31a, 32a erhöht die Stabilität der Versteifungsbereiche 31, 32 in entsprechender Weise wie die Versteifungssicken 34.

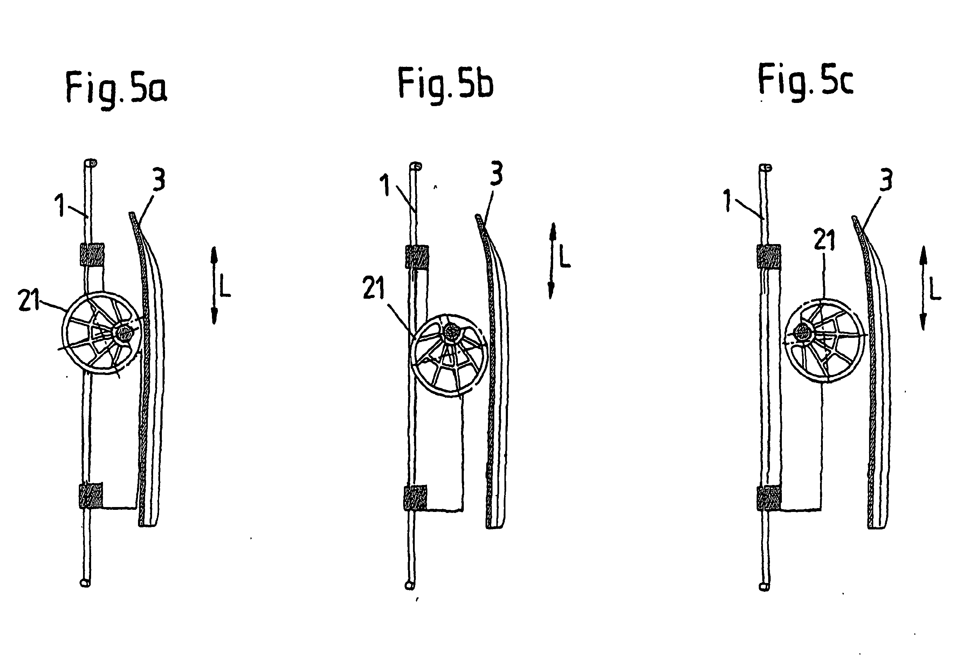

Zur Einstellung der Lage und/oder Wölbung des Wölbelementes 3 dient eine elektrische Verstelleinrichtung 2 mit zwei durch einen gemeinsamen Antrieb 20 angetriebenen Exzenterscheiben 21, 22, die über eine Welle 23 mit einander verbunden sind. Durch Drehung der Exzenterscheiben 21, 22 kann der Abstand des Wölbelementes 3 von dem Lehnengestell 1 quer zur Erstreckungsebene des Wölbelementes 3 eingestellt werden, vergleiche Figuren 5a bis 5c. Die Einstellung des Abstandes erfolgt dabei durch Drehung der Exzenterscheiben 21, 22 mittels des elektrischen Antriebs 20 über die von dem Antrieb 20 angetriebene Welle 23, auf der die beiden Exzenterscheiben 21, 22 drehfest gelagert sind.

Ob die Änderung des Abstandes zwischen dem Lehnengestell 1 und dem Wölbelement 3 in erster Linie zu einer Wölbung des Wölbelementes 3 oder im wesentlichen zu einer Verschiebung des Wölbelementes 3 quer zur Lehnenlängsrichtung L führt, hängt von der Anordnung des Wölbelementes 3 bezüglich des Lehnengestells 1 ab.

Bei der schematischen Darstellung gemäß den Figuren 5a bis 5c ist das Wölbelement 3 quer zur Lehnenlängsrichtung L verschieblich bezüglich des Sitzgestells 1 angeordnet. Eine Verstellung der Exzenterscheiben 21, 22 führt in diesem Fall zu einer Verschiebung des Wölbelementes 3 quer zur Lehnenlängsrichtung L.

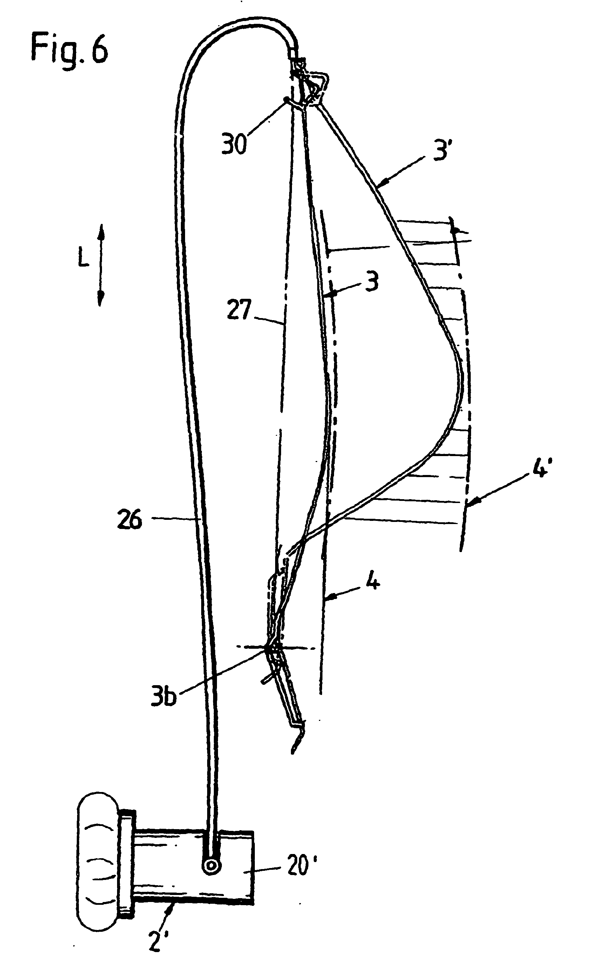

Wenn das Wölbelement 3 demgegenüber mit seinem oberen und unteren Ende jeweils unmittelbar am Lehnengestell L festgelegt ist, vergleiche hierzu die nachfolgenden Ausführungen zu Figur 6, dann bewirkt eine Verstellung der Exzenterscheiben 21, 22 vorwiegend eine Änderung der Wölbung des Wölbelementes 3.

Gemäß der vorliegenden Erfindung ist das Wölbelement 3 nicht unmittelbar zur Anlage an einem Polster der Sitzlehne vorgesehen, sondern vor dem Wölbelement 3 und damit zwischen dem Wölbelement 3 und einem Sitzpolster der Sitzlehne erstreckt sich ein zusätzliches Stützelement 4, so dass keine unmittelbare Einwirkung des Wölbelementes 3 auf das Lehnenpolster erfolgen kann. Die Lage des Lehnenpolsters P ist in Figur 1 b schematisch angedeutet.

Das vor dem Wölbelement 3 anzuordnende Stützelement 4 in Form einer Rückenschale umfasst einen großflächigen, elastisch wölbbaren Grundkörper 40 als Basisbereich, der mit einer Vielzahl an Öffnungen 49 versehen ist. Diese Öffnungen 49 in Form von Durchgangsöffnungen wirken als Druckverteilungsbereiche, welche Druckanhäufungen an einzelnen Stellen des Stützelementes 4 verhindern und einen über die ganze Fläche des Basisbereiches 40 wirkenden, möglichst gleichmäßigen Druckverlauf erzeugen.

Der Basisbereich 40 des Stützelementes 4 ist umgeben von einem Rand R1, R2, R3, R4, der durch einander jeweils paarweise gegenüberliegende Randabschnitte R1, R2 bzw. R3, R4 gebildet wird. Bezogen auf die Einbaulage des Stützelementes 4 in einem Kraftfahrzeugsitz bei senkrecht hochgestellter Rückenlehne bilden diese Randabschnitte zwei seitliche Randabschnitte R1 und R2, einen oberen Randabschnitt R3 sowie einen unteren Randabschnitt R4.

Dabei sind an den seitlichen Rändern R1. R2 sowie am in Lehnenlängsrichtung L oberen und unteren Rand R3, R4 des Stützelementes 4 jeweils Stützbereiche 41 bis 44 angeformt, die jeweils über Verbindungsstege V einstückig mit dem Basisbereich 40 des Stützelementes 4 verbunden sind. Die den Stützbereich 41 bis 44 zugeordneten Verbindungsstege V weisen dabei quer zu ihrer Erstreckungsnchtung (Verbindungsrichtung von dem jeweiligen Stützbereich 41, 42, 43 bzw. 44 zu dem großflächigen Basisbereich 40) eine geringere Ausdehnung auf als die Stützbereiche 41 bis 44 selbst. D. h., die Breite b der Stege (entsprechend der Ausdehnung der Stege senkrecht zur oben definierten Verbindungsrichtung) ist kleiner als die entsprechende Breite B der einzelnen Stützbereiche 41, 42, 43 bzw. 44 in dieser Richtung.

Diese einstückig angeformten Stützbereiche 41 bis 44 wirken als Stützkonturfinger, die lageorientiert den seitlichen sowie oberen und unteren Rückenbereich gleichmäßig unterstützen und die aufgrund der Verbindungsstege geringer Breite b hinreichend elastisch sind, um sich in Abhängigkeit von der Sitzposition des jeweiligen Fahrzeuginsassen an dessen Rückenkontur anzupassen.

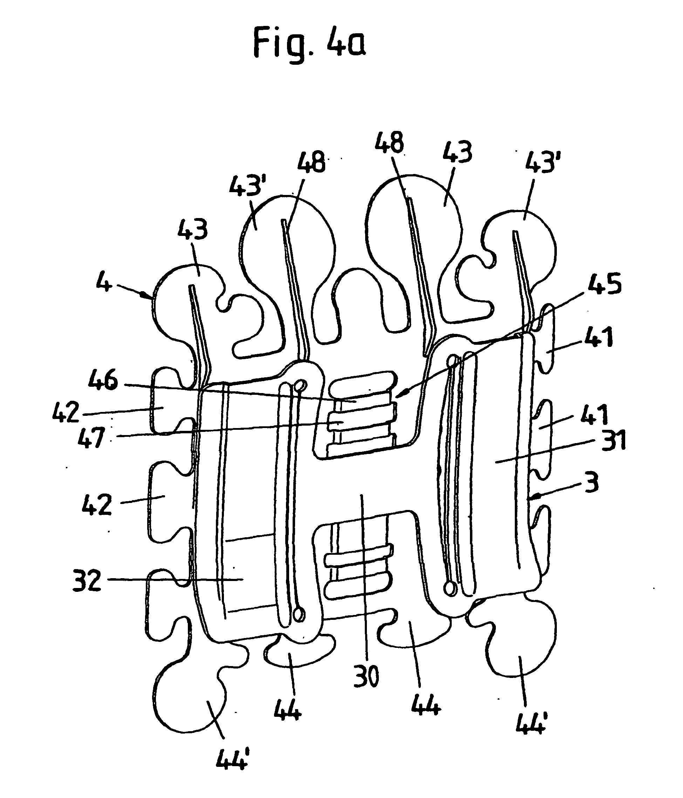

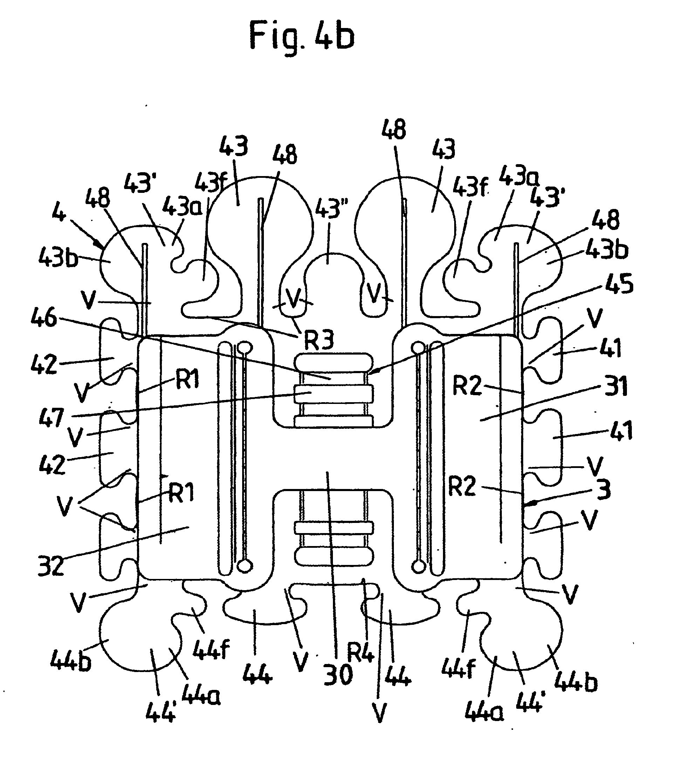

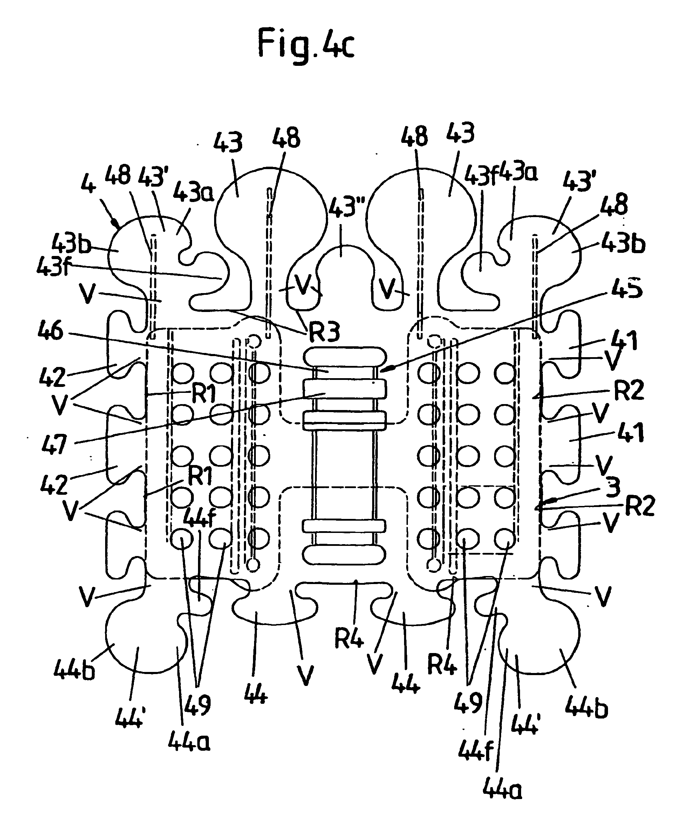

Insbesondere anhand der Figuren 2b bis 2d sowie anhand der Figur 4a ist erkennbar, dass die Stützbereiche 41, 42, 43, 43', 43", 44, 44' jeweils in einem stumpfen Winkel zu der Erstreckungsebene Basisbereichs 40 des Stützelementes 4 geneigt sind. Die Stützbereiche 41, 42, 43, 43'. 43", 44, 44' sind dabei derart von dem Basisbereich 40 abgewinkelt, dass sie sich zu dem Lehnenpolster hin erstrecken, das auf der Vorderseite des Stützelementes 4, d. h. auf der dem Wölbelement 3 abgewandten Seite des Stützehmentes 4 anzuordnen ist.

Für besonders gute Abstützeigenschaften ist die äußere Kontur der einzelnen StOtzbereiche 41, 42, 43, 43', 43", 44. 44' jeweils gekrümmt ausgebildet, also insbesondere frei von scharfen Ecken.

Die an dem oberen Rand R3 des Basisbereiches 40 des Stützelementes 4 angeformten Stützbereiche 43, 43', 43" weisen eine unterschiedliche Größe, d. h. eine unterschiedliche Ausdehnung in der Ebene des Stützelementes 4 auf. Insbesondere weisen zwei Stützbereiche 43 eine größere Ausdehnung in der Richtung senkrecht zum oberen Randabschnitt R3 des Basisbereiches 40 auf als die weiteren Stützbereiche 43'. 43". Dabei sind größere Stützbereiche 43 und kleinere Stützbereiche 43' abwechselnd nebeneinander angeordnet und derart miteinander verschachtelt, dass sie einen großflächigen elastischen Stützbereich für die obere Rückenpartie eines Fahrzeuginsassen bilden.

Anhand der Figuren 1a bis 4c wird femer deutlich, dass die in den Eckabschnitten des Basisbereiches 40, d. h. an den Kreuzungspunkten der seitlichen Randabschnitte R1, R2 mit dem oberen und unteren Randabschnitt R3, R4, vorgesehenen Stützbereiche 43', 44' jeweils einen zusätzlichen, nach innen (d. h. zu einem benachbarten Stützbereich 43 bzw. 44) gerichteten Finger 43f bzw. 44f aufweisen. Aufgrund dieses zusätzlichen Fingers 43f bzw. 44f weist der innen liegende Bereich 43a bzw. 44a des jeweiligen Stützelementes 43' bzw. 44' eine größere Fläche auf als der entsprechende außen liegende Bereich 43b bzw. 44b, wobei der jeweilige innen liegende Bereich 43a bzw. 44a einem benachbarten Stützbereich 43 bzw. 44 zugewandt ist und der außen liegende Bereich 43b bzw. 44b nach außen, weg von dem Stützelement 4 weist. Durch diese asymmetrische Flächenaufteilung wird erreicht, dass bei einer Belastung des entsprechenden Stützbereiches 43' bzw. 44' durch einen sich an das Lehnenpolster anlehnenden Fahrzeuginsassen der jeweilige Stützbereich 43' bzw. 44' derart verdreht wird, dass der jeweils außen liegende Bereich 43b bzw. 44b nach vorne, in Richtung auf das Lehnenpolster verlagert wird und so der Seitenhalt verbessert wird.

Darüber hinaus sind an dem Stützelement 4 (Rückenschale) längsersteckte Versteifungsbereiche in Form von Versteifungsrippen 48 vorgesehen, die sich vorliegend im Bereich der oberen, angeformten Materialabschnitte 43 erstrecken, und zwar parallel zu den jeweiligen Verbindungsstegen V von dem jeweiligen Stützbereich 43 bis zum Grundkörper 40. Hierdurch ist die Steifigkeit der oberen einstückig angeformten Stützbereiche 43 im Vergleich zu den übrigen Abschnitten 41, 42, 44 erhöht. Es hat sich nämlich gezeigt, dass eine Versteifung der oberen Stützbereiche 43, die dem oberen Rücken- bzw. Schulterbereich eines Fahrzeuginsassen zugeordnet sind, zu besonders vorteilhaften Abstützeigenschaften führt. Die Stützbereiche 43, 43' sind dabei jeweils um die durch den jeweiligen längserstreckten Versteifungsbereich 48 gebildetete Achse federelastisch verdrehbar ausgebildet. Bei den unteren Stützbereichen 44, die der unteren Wirbelsäule eines Fahrzeuginsassen zugeordnet sind, ist demgegenüber eine vergleichsweise weichere Ausbildung vorteilhaft.

Insbesondere anhand Figur 4a ist dabei erkennbar, dass sich die längserstreckten Versteifungsbereiche 48 zu dem freien (dem Basisbereich 40 abgewandten) Ende der entsprechenden Stützbereiche 43, 43' hin verjüngen. Hierdurch nimmt die Steifigkeit des jeweiligen Stützbereiches 43, 43' zu seinem freien Ende hin ab bzw. die Elastizität des jeweiligen Stützbereiches 43, 43' zu seinem freien Ende hin zu.

Die Versteifungsbereiche 48 dienen auch zur Unterteilung der in den oberen Ecken des Basisbereiches 40 vorgesehenen Stützbereiche 43' in einen inneren Bereich 43a und einen äußeren Bereich 43b, die durch den Versteifungsbereich 48 voneinander getrennt sind.

In seinem zentralen Bereich 45 weist das Stützelement 4 sich quer zur Lehnenlängsrichtung erstreckende Ausnehmungen 46 und Stege 47 auf, wodurch ein Freiraum für die Wirbelsäule eines Insassen gebildet werden soll.

Im Ergebnis wird bei dem an Hand der Figuren 1a bis 4c dargestellten Ausführungsbeispiel der Erfindung eine vorteilhafte ergonomische Anpassung der den Rückenbereich, insbesondere Lordosenbereich, einer Personen abstützenden Anordnung dadurch erreicht, dass das Wölbelement 3, auf das die Verstelleinrichtung 2 einwirkt, einerseits und das als Rückenschale ausgebildete Stützelement 4 andererseits hintereinander in zwei verschiedenen Ebenen angeordnet sind. Die vorteilhaften Wirkungen dieser Anordnung werden insbesondere auch anhand des in Figur 6 schematisch dargestellten zweiten Ausführungsbeispiels deutlich.

Gemäß Figur 6 dient als Verstellelement zur Einstellung der Wölbung eines Wölbelementes 3 ein Spann- bzw. Straffelement 27 in Form eines Drahtes, der durch einen Antrieb 2' spannbar und mittels einer Hülle 26 von dem Antrieb 2' zu dem Wölbelement 3 geführt ist. Das Wölbelement 3 ist im Bereich seines oberen Endes 3a am Lehnengestell festgelegt und im Bereich seines unteren Endes 3b mit dem Spann- bzw. Straffelement 27 verbunden. Wird das Spannelement 27 mittels des Antriebs 2' gestrafft, so verstärkt dies die Wölbung des Wölbelementes 3, welches z. B. in den in Figur 6 mit 3' bezeichneten Zustand übergeht Dies führt gleichzeitig zu einer Änderung der Lage und Wölbung des Stützelementes 4, das vor dem Wölbelement 3 angeordnet ist und dann beispielsweise in den in Figur 6 mit 4' bezeichneten Zustand übergeht.

Entscheidend ist, dass sich die starke Krümmung des Wölbelementes 3, die eine Folge der Straffung des Spannelementes 27 ist, nicht unmittelbar auf das Stützelement 4 überträgt. Je nach dem, wie das Stützelement 4 mit dem Lehnengestell verbunden ist, führt eine Änderung der Krümmung des Wölbelementes 3 zu einer unterschiedlich starken Änderung der Wölbung und/oder Verschiebung des Stützelementes 4.

Bei den im Figur 6 dargestellten Ausführungsbeispiels kann das Stützelement 4 beispielsweise im Bereich seines oberen und unteren Endes jeweils elastisch über Zugfedem an dem Lehnengestell eingehängt sein. Daher kann das Stützelement 4 als Ganzes entgegen der Wirkung dieser Federelemente senkrecht zur Lehnenlängsrichtung L verschoben werden, wenn das Wölbelement 3 gewölbt wird. Je nach Stärke der Federn, über die das Stützeiemeat 4 am Lehnengestell eingehängt ist, kommt es dabei auch zu einer mehr oder weniger starken Änderung der Wölbung des Stützelementes 4. Die Zunahme der Wölbung ist umso stärker, je größer die Federkraft ist, denn hierdurch wird die Möglichkeit der Verschiebung des Stützelementes 4 als Ganzes begrenzt.

Entscheidend ist, dass die Form des Stützelementes 4 (Rückenschale) nicht nur durch die Wölbung des Wölbelementes 3, sondern entscheidend auch durch die Kontur des Rückenbereiches einer auf dem Sitz befindlichen Person bestimmt wird. Hierdurch ist eine optimale ergonomische Anpassung an den Rückenbereich eines Fahrzeuginsassen bei gleichzeitiger Stützwirkung im Bereich der Lordose (aufgrund der Stützwirkung des Wölbelementes 3) möglich.

Insgesamt ermöglicht diese Anordnung eine großflächige, gleichmäßige Abstützung und eine flexible Anpassungsmöglichkeit an die individuellen Rückengegebenheiten unterschiedlicher Personen, insbesondere im Hinblick auf deren Größe.

Die konkrete Verformung des Wölbelementes 3 sowie des Stützelementes 4 bei einer Einstellung der Verstelleinrichtung 2' (mit einem Antrieb 20') wird entscheidend mitbestimmt durch die Art der Verbindung zwischen dem Wölbelement 3 und dem Lehnengestell sowie dem Stützelement 4 und dem Lehnengestell.

Das vorzugsweise aus Metall bestehende Wölbelement 3 kann beispielsweise über Federelemente oder Drahtelemente am Lehnengestell aufgehängt sein. Alternativ oder zusätzlich kann das Wölbelement 3 Ober Befestigungsbügel mit der Sitzbasis verbunden sein.

Das vorzugsweise aus Metall oder Kunststoff bestehende Stützelement 4 kann mit dem Wölbelement 3 im Bereich von dessen Quertraverse 30 (vorzugsweise linienartig) verbunden sein, z.B. durch Kleben oder Nieten. Femer ist eine Verbindung des Stützelementes 4 mit dem Sitzpolster möglich, z.B. durch Kleben, Nieten oder (teilweises) Einschäumen in den Polsterschaum. Schließlich kann auch das Stützelement (vorzugsweise über weitere Elemente, wie z.B. Federn) mit dem Lehnengestell verbunden sein.

Im Ergebnis soll die Anordnung und Ausbildung des Wölbelementes 3 und des Stützelementes 4 derart sein, dass das Wölbelement 3 aufgrund seiner mittels der zugeordneten Verstelleinrichtung 2' einstellbaren räumlichen Lage (insbesondere Position senkrecht zur Erstreckungsebene des Lehnengestells) eine Grundwölbung des Stützelementes 4 vorgibt, wobei dessen Wölbung insgesamt aber maßgeblich durch das Zusammenwirken mit der Rückenpartie einer auf dem entsprechenden Fahrzeugsitz befindlichen Person bestimmt wird. Hierzu muß das Stützelement 4 eine hinreichende Elastizität (elastische Verformbarkeit) aufweisen, die vorzugsweise größer ist als die des Wölbelementes 3. Dies kann durch eine entsprechende Materialauswahl und Formgebung erreicht werden, wobei das Stützelement 4 femer eine größere Fläche aufweist als das Wölbelement 3.

Eine besondere Elastizität, Flexibilität und Anpassbarkeit des Stützelementes 4 an die Rückenpartie einer auf dem entsprechenden Fahrzeugsitz befindlichen Person wird dabei insbesondere auch durch die vom Rand des Basisbereichs des Stützelementes abstehenden Stützbereiche (Stützkonturfinger) erreicht, die eine im Vergleich zu dem Basisbereich des Stützelementes noch erhöhte Elastizität aufweisen. Dies ist auch darauf zurückzuführen, dass die Stützbereiche jeweils über Verbindungsbereiche in Form von Stegen (mit Einschnürungen versehene Verbindungsbereiche) mit dem Basisbereich des Stützelementes verbunden sind.

In den Figuren 1a bis 1d ist erkennbar, dass an dem Lehnengestell 1 oberhalb der Rückenschale (Stützelement 4) ein zusätzliches Stützelement 5 in Form einer Schale zur Abstützung des Schulterbereiches eines Insassen angeordnet ist Dieses ist mittels einer einen elektrischen Antrieb 60 und ein Ritzel 61 aufweisenden Verstelleinrichtung 6 entlang einer Zahnstange 62 höhenverstellbar.

Eine entsprechende Anordnung zur Einstellung der Höhe kann auch für das als Lordosenstütze dienende untere Stützelement 4 vorgesehen sein.

Das als Schulterstütze dienende Stützelement 5 kann in der gleichen Weise ausgestaltet sein wie das als Lordosenstütze dienende Stützelement 4, also mit Schwächungs- und Versteifungsbereichen sowie mit an seinen Rändern angeformten Materialbereichen versehen sein.

## Patentansprüche

1. Stützelement für eine Polsterung eines Kraitfahrzeugsitzes, insbesondere für die Lehnenpolsterung einer Rückenlehne, mit
- einem, Basisbereich zum Abstützen der Polsterung und
- einem den Basisbereich umgebenden Rand,
wobei von dem Rand (R1, R2, R3, R4) des Basisbereiches (40) mindestens zwei getrennte, entlang des Randes (R1, R2, R3, R4) benachbarte Stützbereiche (41, 42, 43, 43', 43'', 44, 44') abstehen und wobei die Stützbereiche (41, 42, 43, 43', 43'', 44, 44') mit dem Randbereich (40) über jeweils einen Verbindungsbereich (V) verbunden sind, der entlang einer ersten Richtung von dem Basisbereich (40) absteht und dessen Breite (b) senkrecht zu der ersten Richtung kleiner ist als die maximale Breite (B) des jeweiligen Stützbereiches jenseits des Verbindungsbereiches (V),
**dadurch gekennzeichnet,**
**dass** entlang eines Randabschnittes (R3) des Basisbereiches (40) abwechselnd größere und kleinere Stützbereiche (43, 43") angeordnet sind, die ineinander verschachtelt sind.

2. Stützelement nach Anspruch 1, **dadurch gekennzeichnet, dass** die Stützbereiche (41, 42, 43, 43', 43", 44, 44') entlang des Randes (R1, R2, R3, R4) voneinander beabstandet sind.

3. Stützelement nach Anspruch 1 oder 2, **dadurch gekennzeichnet, dass** die Stützbereiche (41, 42, 43, 43', 43'', 44, 44') jeweils mit dem Basisbereich (40) verbunden; insbesondere einstückig an diesem angeformt sind, jedoch nicht zusätzlich untereinander verbunden sind.

4. Stützelement nach einem der vorhergehenden Ansprüche, **dadurch gekennzeichnet, dass** die Stützbereiche (41, 42, 43, 43', 43'', 44, 44') mit dem Basisbereich (40) über verbindungsbereiche (V) verbunden sind, die entlang des Randes (R1, R2, R3, R4) des Basisbereiches (40) voneinander beabstandet sind.

5. Stützelement nach einem der vorhergehenden Ansprüche, **dadurch gekennzeichnet, dass** die Stützbereiche (41, 42, 43, 43', 43", 44) mit dem Randbereich (40) über jeweils einen Verbindungsbereich (V) verbunden sind, der sich zumindest abschnittsweise zu dem Basisbereich (40) hin verjüngt.

6. Stützelement nach einem der vorhergehenden Ansprüche, **dadurch gekennzeichnet, dass** die Stützbereiche (41, 42, 43, 43', 43", 44) mit dem Randbereich (40) über jeweils einen Verbindungsbereich (V) verbunden sind, der zumindest abschnittsweise als Steg ausgebildet ist.

7. Stützelement nach einem der vorhergehenden Ansprüche, **dadurch gekennzeichnet, dass** die Stützbereiche (41, 42, 43, 43', 43'', 44, 44') sich zumindest teilweise im Wesentlichen in derselben Ebene erstrecken, wie derjenige Randbereich des Basisbereiches (40), von dem der jeweilige Stützbereich absteht.

8. Stützelement nach einem der vorhergehenden Ansprüche, **dadurch gekennzeichnet, dass** die Stützbereiche (41, 42, 43, 43', 43",44, 44') sich zumindest teilweise in einem stumpfen Winkel zu der Ebene erstrecken, in der derjenige Randbereich des Basisbereiches (40) liegt, von dem der entsprechende Stützbereich absteht.

9. Stützelement nach einem der vorhergehenden Ansprüche, **dadurch gekennzeichnet, dass** die Stützbereiche (41, 42, 43, 43', 43", 44, 44') zumindest teilweise zu der Polsterung (P) hin von dem Basisbereich (40) abgewinkelt sind.

10. Stützelement nach einem der vorhergehenden Ansprüche, **dadurch gekennzeichnet, dass** der Rand (R1, R2, R3, R4) des Basisbereiches durch mehrere Randabschnitte (R1, R2, R3, R4) gebildet wird, die jeweils paarweise winklig zueinander verlaufen und/oder einander paarweise gegenüberliegen.

11. Stützelement nach Anspruch 10, **dadurch gekennzeichnet, dass** an mindestens einem Randabschnitt (R1, R2, R3, R4) eine Mehrzahl entlang des Randabschnittes voneinander beabstandeter Stützbereiche (41; 42; 43, 43', 43"; 44, 44') vorgesehen ist.

12. Stützelement nach Anspruch 11, **dadurch gekennzeichnet, dass** an jedem Randabschnitt (R1, R2, R3, R4) eine Mehrzahl entlang des Randabschnittes voneinander beabstandeter Stützbereiche (41; 42; 43, 43', 43"; 44, 44') vorgesehen ist.

13. Stützelement nach einem der vorhergehenden Ansprüche, **dadurch gekennzeichnet, dass** das Stützelement (4) Versteifungsbereiche (48), insbesondere in Form von Rippen oder Sicken, aufweist.

14. Stützelement nach Anspruch 13, **dadurch gekennzeichnet, dass** sich die Versteifungsbereiche (48) zumindest entlang eines Teiles der Stützbereiche (43) erstrecken.

15. Stützelement nach Anspruch 13 oder 14, **dadurch gekennzeichnet, dass** sich mindestens ein Versteifungsbereich (48) vom Basisbereich (40) des Stützelementes (4) derart in einen Stützbereich (43) hinein erstreckt, dass die Steifigkeit des Stützbereiches (43) in Richtung seines freien, von dem Basisbereich (40) beabstandeten Endes abnimmt.

16. Stützelement nach Anspruch 14 oder 15, **dadurch gekennzeichnet, dass** der Stützbereich (43) um eine durch den Versteifungsbereich (48) gebildete Achse federelastisch verdrehbar ausgebildet ist.

17. Stützelement nach einem der vorhergehenden Ansprüche, **dadurch gekennzeichnet, dass** die äußere Kontur der Stützbereiche (41, 42, 43, 43', 43", 44, 44') frei von scharfen Ecken ist.

18. Stützelement nach einem der vorhergehenden Ansprüche, **dadurch gekennzeichnet, dass** die äußere Kontur der Stützbereiche (41, 42, 43, 43', 43", 44, 44') gekrümmt ausgebildet ist.

19. Stützelement nach einem der vorhergehenden Ansprüche, **dadurch gekennzeichnet, dass** an mindestens einem Eckabschnitt des Basisbereiches (40) ein Stützbereich (43', 44') vorgesehen ist, der von dem Rand (R1, R2; R3, R4) des Basisbereiches (40) absteht.

20. Stützelement nach Anspruch 19, **dadurch gekennzeichnet, dass** der am Eckabschnitt vorgesehene Stützbereich (43', 44') bezüglich einer Achse, insbesondere einer durch einen Versteifungsbereich (48) gebildeten Achse, eine asymmetrische Flächenaufteilung aufweist, so dass bei einer Belastung des Stützbereiches (43', 44') dieser um die Achse verdreht wird.

21. Stützelement nach Anspruch 20, **dadurch gekennzeichnet, dass** der am Eckabschnitt vorgesehene Stützbereich (43', 44') zur Bildung einer asymmetrischen Flächenaufteilung einen von dem Stützbereich abstehenden Stützfinger (43f, 44f) aufweist.

22. Stützelement nach einem der vorhergehenden Ansprüche, **dadurch gekennzeichnet, dass** das Stützelement (4) Druckverteilungsbereiche (49), insbesondere in Form von Durchgangsöffnungen, aufweist.

23. Rückenlehne für einen Kraftfahrzeugsitz mit einem Stützeleffient nach einem der vorhergehenden Ansprüche.

24. Rückenlehne nach Anspruch 23 mit
- einem Lehnenpolster,
- einem Wölbelement, das sich entlang einer Oberfläche des Lehnenpolsters erstreckt,
- mindestens einer Verstelleinrichtung, mit der die Lage und/oder Krümmung des Wölbelementes verstellbar ist, um die Wölbung des Lehnenpolsters einzustellen,
wobei sich zwischen dem Wölbelement (3) und dem Lehnenpolster (P) ein wölbbares Stützelement (4) erstreckt, das mit dem Wölbelement (3) in Wirkverbindung steht und das zumindest abschnittsweise an dem Lehnenpolster (P) anliegt.

25. Rückenlehne nach Anspruch 24, **dadurch gekennzeichnet, dass** die Verstelleinrichtung (2, 2') mindestens ein Verstellelement (21, 27) aufweist, das mit dem Wölbelement (3) in Wirkverbindung bringbar ist, und dass die Verstelleinrichtung (2, 2') über das Wölbelement (3) auf das Stützelement (4) einwirkt.

26. Rückenlehne nach Anspruch 24 oder 25, **dadurch gekennzeichnet, dass** das Stützelement (4) in einer Ebene zwischen dem Lehnengestell (1) und dem Sitzpolster (P) eine größere Fläche überdeckt als das Wölbelement (3).

27. Rückenlehne nach einem der Ansprüche 24 bis 26, **dadurch gekennzeichnet, dass** das Wölbelement (3) und oder das Stützelement (4) am Lehnengestell (L) festgelegt ist.

## Claims

1. Support element for upholstery for a motor vehicle seat, more particularly for the backrest upholstery of a seat back, with
- a base region for supporting the upholstery and
- an edge surrounding the base region,
wherein at least two separate adjacent support regions (41, 42, 43, 43', ,43", 44, 44') are provided along the edge (R1, R2, R3, R4) of the base region (40) and project from said edge (R1, R2, R3, R4) and wherein the support regions (41, 42, 43, 43', 43", 44, 44') are each connected to the edge region (40) through a connecting region (V) which protrudes along a first direction from the base region (40) and whose width (b) perpendicular to the first direction is smaller than the maximum width (B) of the relevant support region on the other side of the connecting region (V),
**characterised in that**
larger and smaller support regions (43, 43") are arranged alternately along an edge section (R3) of the base region (40) and are boxed in each other.

2. Support element according to claim 1, **characterised in that** the support regions (41, 42, 43, 43', 43", 44, 44') are spaced from each other along the edge (R1, R2, R3, R4).

3. Support element according to claim 1 or 2, **characterised in that** the support regions (41, 42, 43, 43', 43", 44, 44') are each connected to the base region (40), preferably moulded integral therewith, but are not however additionally connected to each other.

4. Support element according to one of the preceding claims, **characterised in that** the support regions (41, 42, 43, 43', 43", 44, 44') are connected to the base region (40) through connecting regions (V) which are spaced from each other along the edge (R1, R2, R3, R4) of the base region (40).

5. Support element according to one of the preceding claims, **characterised in that** the support regions (41, 42, 43, 43', 43", 44, 44') are connected to the edge region (40) each through a connecting region (V) which tapers at least in some sections towards the base region (40).

6. Support element according to one of the preceding claims, **characterised in that** the support regions (41, 42, 43, 43', 43", 44, 44') are connected to the edge area (40) each through a connecting region (V) which is formed at least in sections as a web.

7. Support element according to one of the preceding claims, **characterised in that** the support regions (41, 42, 43, 43', 43", 44, 44') extend at least in part substantially in the same plane as that edge region of the base region (40) from which the relevant support region projects.

8. Support element according to one of the preceding claims, **characterised in that** the support regions (41, 42, 43, 43', 43", 44, 44') extend at least in part at an obtuse angle to the plane in which lies that edge region of the base region(40) from which the corresponding support region projects.

9. Support element according to one of the preceding claims, **characterised in that** the support regions (41,42,43,43',43",44,44') are angled at least in part towards the upholstery (P) from the base region (40).

10. Support element according to one of the preceding claims, **characterised in that** the edge (R1, R2, R3, R4) of the base region is formed by several edge sections (R1, R2, R3, R4) which each run in pairs at an angle towards each other and/or are opposite one another in pairs.

11. Support element according to claim 10, **characterised in that** a number of support regions (41, 42, 43, 43', 43", 44, 44') spaced from each other along the edge section are provided on at least one edge section (R1, R2, R3, R4).

12. Support element according to claim 11, **characterised in that** a number of support regions (41, 42, 43, 43', 43", 44, 44') spaced from each other along the edge section are provided on each edge sections (R1, R2, R3, R4).

13. Support element according to one of the preceding claims, **characterised in that** the support element (4) has reinforcement regions (48) more particularly in the form of ribs or swages.

14. Support element according to claim 13, **characterised in that** the reinforcement regions (48) extend at least along one part of the support regions (43).

15. Support element according to claim 13 or 14, **characterised in that** at least one reinforcement region (48) extends from the base region (40) of the support element (4) into a support region (43) so that the stiffness of the support region (43) decreases towards its free end spaced from the base region (40).

16. Support element according to claim 14 or 15, **characterised in that** the support region (43) is formed rotatable spring elastically round an axis formed by the reinforcement region (48).

17. Support element according to one of the preceding claims, **characterised in that** the outer contour of the support regions (41, 42, 43, 43', 43", 44, 44') is free of sharp corners.

18. Support element according to one of the preceding claims, **characterised in that** the outer contour of the support regions (41, 42, 43, 43', 43", 44, 44') is curved.

19. Support element according to one of the preceding claims, **characterised in that** a support region (43', 44') is provided at at least one corner section of the base region (40) and protrudes from the edge (R1, R2, R3, R4) of the base region (40).

20. Support element according to claim 19, **characterised in that** the support region (43', 44') provided at the corner section has in relation to an axis, more particularly an axis formed by a reinforcement region (48) an asymmetrical division of the surface area so that with strain on the support region (43', 44') the latter is turned about the axis.

21. Support element according to claim 20, **characterised in that** the support region (43', 44') provided at the corner section for forming an asymmetrical flat surface area division has a support finger (43f, 44f) which protrudes from the support region.

22. Support element according to one of the preceding claims, **characterised in that** the support element (4) has pressure distributing areas (49) more particularly in the form of through openings.

23. Backrest for a motor vehicle seat with a support element according to one of the preceding claims.

24. Backrest according to claim 23 with
- a backrest upholstery
- a curved element which extends along a surface of the backrest upholstery
- at least one adjusting device with which the position and/or curvature of the curved element can be adjusted in order to set the curvature of the backrest upholstery
whereby between the curved element (3) and the backrest upholstery (P) a curvable support element (4) extends which is in active connection with the curved element (3) and which bears against the backrest upholstery (P) at least in some sections.

25. Backrest according to claim 24, **characterised in that** the adjusting device (2, 2') has at least one adjusting element (21, 27) which can be brought into active connection with the curved element (3) and that the adjusting device (2, 2') acts through the curved element (3) on the support element (4).

26. Seat back according to claim 24 or 25, **characterised in that** the support element (4) covers a larger surface area in a plane between the backrest frame (1) and the seat upholstery (P) than the curved element (3).

27. Seat back according to one of claims 24 to 26, **characterised in that** the curved element (3) and/or the support element (4) is fixed on the seatback frame (L).

## Revendications

1. Elément de support pour un rembourrage d'un siège de véhicule automobile, en particulier pour le rembourrage dorsal d'un dossier, comportant
- une région de base pour soutenir le rembourrage et
- un bord entourant la région de base,
dans lequel au moins deux régions de support (41, 42, 43, 43', 43", 44, 44') séparées, voisines le long du bord (R1, R2, R3, R4) font saillie depuis le bord (R1, R2, R3, R4) de la région de base (40), et dans lequel les régions de support (41, 42, 43, 43', 43", 44, 44') sont reliées à la région de bord (40) via une région de liaison (V) respective qui fait saillie depuis la région de base (40) le long d'une première direction et dont la largeur (b), perpendiculairement à la première direction, est plus petite que la largeur maximum (B) de la région de support respective au-delà de la région de liaison (V),
**caractérisé en ce que**
le long d'un tronçon de bord (R3) de la région de base (40) sont agencées en alternance des régions de support plus grandes et plus petites (43, 43 ") qui sont imbriquées les unes dans les autres.

2. Elément de support selon la revendication 1, **caractérisé en ce que** les régions de support (41, 42, 43, 43', 43", 44, 44') sont espacées les unes des autres le long du bord (R1, R2, R3, R4).

3. Elément de support selon la revendication 1 ou 2, **caractérisé en ce que** les régions de support (41, 42, 43, 43', 43", 44, 44') sont chacune reliées à la région de base (40), en particulier conformées d'un seul tenant avec celle-ci, sans être toutefois reliées additionnellement les unes aux autres.

4. Elément de support selon l'une des revendications précédentes, **caractérisé en ce que** les régions de support (41, 42, 43, 43', 43", 44, 44') sont reliées à la région de base (40) via des régions de liaison (V) qui sont espacées les unes des autres le long du bord (R1, R2, R3, R4) de la région de base (40).

5. Elément de support selon l'une des revendications précédentes, **caractérisé en ce que** les régions de support (41, 42, 43, 43', 43", 44, 44') sont reliées à la région de bord (40) via une région de liaison respective (V) qui se rétrécit au moins par tronçon vers la région de base (40).

6. Elément de support selon l'une des revendications précédentes, **caractérisé en ce que** les régions de support (41, 42, 43, 43', 43", 44, 44') sont reliées chacune à la région de bord (40) via une région de liaison respective (V) qui est réalisée au moins par tronçon sous forme de traverse.

7. Elément de support selon l'une des revendications précédentes, **caractérisé en ce que** les régions de support (41, 42, 43, 43', 43", 44, 44') s'étendent au moins en partie sensiblement dans le même plan que la région de bord de la région de base (40) depuis laquelle la région de support respective fait saillie.

8. Elément de support selon l'une des revendications précédentes, **caractérisé en ce que** les régions de support (41, 42, 43, 43', 43", 44, 44') s'étendent au moins en partie sous un angle obtus par rapport au plan dans lequel se trouve la région de bord de la région de base (40) depuis laquelle la région de support correspondante fait saillie.

9. Elément de support selon l'une des revendications précédentes, **caractérisé en ce que** les régions de support (41, 42, 43, 43', 43", 44, 44') sont coudées depuis la région de base (40) au moins en partie vers le rembourrage (P).

10. Elément de support selon l'une des revendications précédentes, **caractérisé en ce que** le bord (R1, R2, R3, R4) de la région de base est formé par plusieurs tronçons de bord (R1, R2, R3, R4) qui s'étendent respectivement par paires en angle les uns par rapport aux autres et/ou sont opposés par paires les uns par rapport aux autres.

11. Elément de support selon la revendication 10, **caractérisé en ce que** sur au moins un tronçon de bord (R1, R2, R3, R4) est prévue une multitude de régions de support (41, 42, 43, 43', 43", 44, 44') espacées les unes des autres le long du tronçon de bord.

12. Elément de support selon la revendication 11, **caractérisé en ce que** sur chaque tronçon de bord (R1, R2, R3, R4) est prévue une multitude de régions de support (41, 42, 43, 43', 43", 44, 44') espacées les unes des autres le long du tronçon de bord.

13. Elément de support selon l'une des revendications précédentes, **caractérisé en ce que** l'élément de support (4) présente des régions de raidissement (48), en particulier sous forme de nervures ou de moulures.

14. Elément de support selon la revendication 13, **caractérisé en ce que** les régions de raidissement (48) s'étendent au moins le long d'une partie des régions de support (43).

15. Elément de support selon la revendication 13 ou 14, **caractérisé en ce qu'**au moins une région de raidissement (48) s'étend depuis la région de base (40) de l'élément de support (4) jusque dans une région de support (43) de telle sorte que la rigidité de la région de support (43) diminue en direction de son extrémité libre espacée de la région de base (40).

16. Elément de support selon la revendication 14 ou 15, **caractérisé en ce que** la région de support (43) est réalisée de manière à pouvoir se tordre élastiquement à la manière d'un ressort autour d'un axe formé par la région de raidissement (48).

17. Elément de support selon l'une des revendications précédentes, **caractérisé en ce que** le contour extérieur des régions de support (41, 42, 43, 43', 43", 44, 44') est exempt d'angles aigus.

18. Elément de support selon l'une des revendications précédentes, **caractérisé en ce que** le contour extérieur des régions de support (41, 42, 43, 43', 43", 44, 44') est réalisé courbé.

19. Elément de support selon l'une des revendications précédentes, **caractérisé en ce qu'**au moins sur un tronçon d'angle de la région de base (40) est prévue une région de support (43, 44) qui fait saillie depuis le bord (R1, R2, R3, R4) de la région de base (40).

20. Elément de support selon la revendication 19, **caractérisé en ce que** la région de support (43', 44') prévue sur le tronçon d'angle présente une répartition de surface asymétrique par rapport à un axe, en particulier un axe formé par une région de raidissement (48), de telle sorte qu'en cas de sollicitation de la région de support (43', 44'), celle-ci est tordue autour de l'axe.

21. Elément de support selon la revendication 20, **caractérisé en ce que** la région de support (43', 44') prévue sur le tronçon d'angle présente un doigt de support (43f, 44f) faisant saillie depuis la région de support, pour former une répartition de surface asymétrique.

22. Elément de support selon l'une des revendications précédentes, **caractérisé en ce que** l'élément de support (4) présente des régions de répartition de pression (49), en particulier sous forme d'ouvertures traversantes.

23. Dossier pour un siège de véhicule automobile, comportant un élément de support selon l'une des revendications précédentes.

24. Dossier selon la revendication 23, comportant
- un rembourrage dorsal,
- un élément de cambrage qui s'étend le long d'une surface du rembourrage dorsal,
- au moins un dispositif de réglage permettant de régler la position et/ou la courbure de l'élément de cambrage pour régler la cambrure du rembourrage dorsal,
dans lequel entre l'élément de cambrage (3) et le rembourrage dorsal (P) s'étend un élément de support (4) susceptible d'être cambré qui est en liaison active avec l'élément de cambrage (3) et qui est en appui au moins par tronçons sur le rembourrage dorsal (P).

25. Dossier selon la revendication 24, **caractérisé en ce que** le dispositif de réglage (2, 2') présente au moins un élément de réglage (21, 27) qui peut être amené en liaison active avec l'élément de cambrage (3), et **en ce que** le dispositif de réglage (2, 2') agit sur l'élément de support (4) via l'élément de cambrage (3).

26. Dossier selon la revendication 24 ou 25, **caractérisé en ce que** l'élément de support (4) recouvre, dans un plan entre le bâti de dossier (1) et le rembourrage de siège (P), une surface plus grande que l'élément de cambrage (3).

27. Dossier selon l'une des revendications 24 à 26, **caractérisé en ce que** l'élément de cambrage (3) et/ou l'élément de support (4) est/sont immobilisé(s) sur le bâti de dossier (L).
